Europäisches Patentamt

European Patent Office

Office européen des brevets

(11) Veröffentlichungsnummer: **0 311 875**

**A2**

## (12) EUROPÄISCHE PATENTANMELDUNG

(21) Anmeldenummer: **88116420.6**

(51) Int. Cl.⁴: **B29C 45/16 , B29C 45/20**

(22) Anmeldetag: **05.10.88**

(30) Priorität: **16.10.87 DE 3735099**

(43) Veröffentlichungstag der Anmeldung:
**19.04.89 Patentblatt 89/16**

(84) Benannte Vertragsstaaten:
**AT BE CH DE ES FR GB GR IT LI LU NL SE**

(71) Anmelder: **Battenfeld GmbH**
**Scherl 10**
**D-5882 Meinerzhagen(DE)**

(72) Erfinder: **Eckardt, Helmut, Dipl.-Ing.**
**Goethestrasse 18**
**D-5882 Meinerzhagen(DE)**
Erfinder: **Ehritt, Jürgen**
**Auf der Platte 3**
**D-5912 Hilchenbach-Müsen(DE)**
Erfinder: **Bockenheimer, Alexander, Dipl.-Ing.**
**Egerpohl 44**
**D-5272 Wipperfürth(DE)**
Erfinder: **Teschner, Rainer**
**Hösinghausen 16**
**D-5882 Meinerzhagen(DE)**

(74) Vertreter: **Müller, Gerd et al**
**Patentanwälte**
**HEMMERICH-MÜLLER-GROSSE-POLLMEIER--**
**MEY-VALENTIN Hammerstrasse 2**
**D-5900 Siegen 1(DE)**

(54) **Verfahren und Vorrichtung zur Herstellung von Mehrschicht-Formteilen.**

(57) Zur Herstellung von Mehrschicht-Formteilen aus mindestens zwei Kunststoffkomponenten mit wesentlich verschiedenen Verhaltens-, Verarbeitungs- und/oder Temperatureigenschaften wird ein Verfahren benutzt, bei dem die Kunststoffkomponenten aus den verschiedenen Spritzeinheiten über eine gemeinsame Angußbuchse in den Formhohlraum eines Formwerkzeuges gespritzt werden. Dabei werden diese Kunststoffkomponenten mit einer festgelegten Zeitfolge, insbesondere während aufeinanderfolgender Zeiträume, zunächst in verschiedene Querschnittszonen eines gemeinsamen Angußkegels 3 eingeleitet. Daraufhin werden die Kunststoffkomponenten durch diesen Angußkegel 3 konvergierend in den Angußkanal 4 gedrückt, durch den sie in den Formhohlraum 2 des Formwerkzeuges 1 gelangen.

FIG. 1

## Verfahren und Vorrichtung zur Herstellung von Mehrschicht-Formteilen

Die Erfindung betrifft ein Verfahren zur Herstellung von Mehrschicht-Formteilen aus mindestens zwei Kunststoffkomponenten mit wesentlich verschiedenen Verhaltens-, Verarbeitungs- und/oder Temperatureigenschaften, bei dem die Kunststoffkomponenten aus den verschiedenen Spritzeinheiten über eine gemeinsame Angußbuchse in den Formhohlraum eines Formwerkzeuges gespritzt werden.

Gegenstand der Erfindung ist darüber hinaus aber auch eine Vorrichtung zur Durchführung dieses Verfahrens.

Ein Verfahren der vorgenannten Gattung sowie eine Vorrichtung zu deren Durchführung ist zur Herstellung von Formteilen aus thermoplastischem Kunststoff mit einer kompakten Außenhaut und einem porigen Kern bereits bekannt durch die DE-A- 27 05 291. Hierbei strömen die kompakte Kunststoffkomponente und die ein Treibmittel enthaltende Kunststoffkomponente über getrennte Kanäle in die Angußbuchse ein und kommen erst in dieser, vorzugsweise nahe ihrer Auslaßseite, miteinander in Verbindung.

Bei der Vorrichtung zur Durchführung dieses Verfahrens besitzt die Angußbuchse an ihrer Einströmseite mindestens zwei voneinander getrennte, mit jeweils einer Spritzeinheit verbindbare Einsatzkanäle, die anschließend in einen gemeinsamen Einspritzkanal übergehen.

Nachteilig bei diesem Stand der Technik ist aber einerseits, daß der bei der Herstellung der Formteile zwangsläufig gebildete Anguß zum Formteil hin einen relativ großen Querschnitt hat, der nur mit einem beträchtlichen technischen Zusatzaufwand einwandfrei vom fertigen Formteil entfernt werden kann.

Nachteilig ist aber auch, daß die etwa hosenförmig gestaltete Angußbüchse einen hohen Herstellungsaufwand bedingt und daher relativ kostenaufwendig ist.

Durch die EP-A-0 197 830 ist eine gattungsgemäße Verfahrensart auch bereits zur Herstellung von Mehrschicht-Formteilen bekanntgeworden, deren Hautmaterial eine thermoplastische Kunststoffkomponente ist, während als Kernmaterial ein Duroplast eingesetzt wird.

Auch bei diesem bekannten Verfahren ist es nachteilig, daß der beim Spritzgießen des Formteils zwangsläufig entstehende Anguß einen beträchtlichen Verbindungsquerschnitt zum Formteil hin hat und daher nur mit beträchtlichem Zusatzaufwand einwandfrei von diesem Formteil abgetrennt werden kann.

Nachteilig bei der Vorrichtung zur Durchführung dieses Verfahrens ist darüber hinaus, daß nur mit einem Düsenkopf gearbeitet werden kann, der mindestens zwei zueinander konzentrische Düsenöffnungen, nämlich eine zentrale Düsenöffnung und eine diese umgebende, ringförmige Düsenöffnung besitzt.

Damit unter Benutzung der bekannten Vorrichtung zur Durchführung des Verfahrens die unterschiedlichen Kunststoffkomponenten auch mit unterschiedlichen Temperaturen verarbeitet werden können, ist es eine notwendige Bedingung, jedem der vorhandenen Düsen- bzw. Durchlaßkanäle ein eigenes ·Heiz-und/oder Kühlsystem zuzuordnen. Trotzdem bereitet aber die gleichzeitige Verarbeitung von Kunststoffkomponenten mit unterschiedlichem Temperaturniveau noch beträchtliche Schwierigkeiten, weil nämlich diese Kunststoffkomponenten innerhalb der relativ großvolumigen Angußbuchse in konzentrischen Masseströmen zusammentreffen. Dies hat zwangsläufig zur Folge, daß sich eine unerwünschte Anpassung der verschiedenen Massetemperaturen einstellt, die das Arbeitsergebnis, nämlich die Qualität der fertigen Formteile, nachhaltig beeinträchtigen kann. So ist bspw. die Herstellung von Mehrtschicht-Formteilen aus Weich-PVC und Polycarbonat sehr problematisch. Die Verarbeitung von thermisch empfindlichen Kunststoffen nach der zuletzt beschriebenen, bekannten Verfahrensart bereitet beträchtliche Schwierigkeiten oder ist sogar unmöglich.

Zweck der Erfindung ist es, die den vorstehend erläuterten, bekannten Verfahren und Vorrichtungen eigentümlichen Unzulänglichkeiten auszuräumen. Deshalb liegt der Erfindung die Aufgabe zugrunde, ein Verfahren der eingangs spezifizierten Art anzugeben sowie auch eine Vorrichtung zu dessen Durchführung zu schaffen, mit dem bzw. durch die auch Mehrschicht-Formteile aus beträchtlich unterschiedlichen Kunststoffmaterialien, wie Thermoplasten, Duroplasten, Elastomeren, sowie auch thermisch empfindlichen Kunststoffmateria lien, bspw. Hart-PVC problemlos und sicher so hergestellt werden können, das die beim Spritzvorgang zwangsläufig entstehenden Angüsse zum Formteil hin nur einen sehr geringen Querschnitt erhalten.

In verfahrenstechnischer Hinsicht wird diese Aufgabe - nach dem Kennzeichen des Anspruchs 1 - erfindungsgemäß dadurch gelöst, daß die Kunststoffkomponenten mit einer festgelegten Zeitfolge, insbesondere während aufeinanderfolgender Zeiträume zunächst in verschiedene Querschnitts- Zonen eines gemeinsamen Angußkegels eingeleitet und daraufhin in diesem Angußkegel konvergierend in den Angußkanal der Angußbuchse gedrückt werden.

Weiterhin ist es nach der Erfindung aber auch noch wichtig, daß - nach Anspruch 2 - mindestens eine, vorzugsweise aber jede Kunststoffkomponente zunächst aus ihrer Spritzeinheit unter seitlicher Ablenkung in den Angußkegel eingeleitet und dann aus diesem wiederum unter seitlicher Ablenkung mit Kontraktionsströmung in den Angußkanal der Angußbuchse geführt wird.

Das erfindungsgemäße Verfahren läßt sich in vorteilhafter Weise auch zur Verarbeitung von Kunststoffkomponenten benutzen, die mit erheblichen Temperaturunterschieden verarbeitet werden müssen und/oder voneinander beträchtlich verschiedene Eigenschaften aufweisen.

Die Erfindung bietet die Herstellungsmöglichkeit von Mehrschicht-Formteilen,
- bei denen die Kunststoffkomponenten mit relativ großen Temperaturunterschieden (100.°C oder mehr) verarbeitet werden müssen;
- die Kunststoffkomponenten thermisch sehr empfindlich sind (Hart-PVC);
- die aus Thermoplasten und Duroplasten bzw. Elastomeren bestehen;
- die aus mehreren verschiedenen Thermoplasten bzw. Elastomeren bestehen;
- die aus mehreren unterschiedlichen Duroplasten bzw. Elastomeren bestehen;
- die aus mehreren verschiedenen Thermoplasten bestehen.

Eine erfindungemäße Vorrichtung zur Herstellung von Mehrschicht-Formteilen aus mindestens zwei Kunststoffkomponenten mit wesentlich verschiedenen Verhaltens-, Verarbeitungs-und/oder Temepratureigenschaften, bei der die Kunststoffkomponenten aus den verschiedenen Spritzeinheiten über eine gemeinsame Angußbüchse in den Formhohlraum eines Formwerkzeuges spritzbar sind, zeichnet sich erfindungsgemäß - nach Anspruch 3 - besonders dadurch aus,
daß der Angußkegel eine von der Angußöffnung für die Spritzeinheiten zum Angußkanal der Angußbuchse hin konvergierende Form aufweist,
daß die Angußöffnung des Angußkegels für mindestens eine, vorzugsweise aber jede Spritzeinheit in eine radial nach auswärts geführte, flache Eintrittsmulde ausläuft,
und daß der innere Endabschnitt des Angußkegels mit einer sphärischen Übergangsmulde unter starker Querschnitts-Verengung in den Angußkanal der Angußbuchse mündet.

Aufgrund dieser Ausgestaltung der Vorrichtung kann der bei jedem Spritzvorgang zwangsläufig entstehende Anguß vom Formteil sehr leicht entfernt werden, weil er nur einen geringen Verbindungsquerschnitt hierzu hat, der sich leicht und glatt durchtrennen läßt.

Die erfindungemäße Vorrichtung eignet sich auch in besonders vorteilhafter Weise zur Verwendung an solchen Formwerkzeugen, die gleichzeitig über mehrere Anspritzpunkte von Spritzaggregaten mit den Kunststoffkomponenten versorgt werden. Auch ist ihre problemlose Benutzung bei Formwerkzeugen mit Heißkanal- bzw. Kaltkanalsystemen sowie auch bei Plattenwerkzeugen möglich, sofern diese selbst für die Verarbeitung der betreffenden Kunststoffkomponenten geeignet sind. Auch bei derartigen Werkzeugen ist es nämlich wichtig, daß die verschiedenen Kunststoffkomponenten bis zum Anspritzpunkt des jeweiligen Formhohlraums getrennt geführt werden, indem jedem Anspritzpunkt eine erfindungsgemäße Vorrichtung zugeordnet ist.

Ein weiterbildendes Erfindungsmerkmal wird - nach Anspruch 4 - auch noch darin gesehen, daß die Spritzeinheiten mit den Durchlaßkanälen ihrer Düsenköpfe außerhalb der Umrißlinien der Angußöffnung des Angußkegels in die Eintrittsmulden der Angußbuchse gerichtet sind. Hierdurch wird erreicht, daß die aus den Durchlaßkanälen der Düsenköpfe austretende Kunststoffkomponente zunächst eine seitliche Ablenkung erfährt, bevor sie in die Angußöffnung des Angußkegels eintreten kann.

Obwohl es ohne weiteres möglich ist, jede Spritzeinheit über einen eigenen Düsenkopf mit dem Angußkegel in Verbindung zu bringen, erweist es sich erfindungsgemäß - nach Anspruch 5 -als besonders vorteilhaft, wenn die Spritzeinheiten über einen gemeinsamen, mindestens zwei Durchlaßkanäle enthaltenden Düsenkopf an die Eintrittsmulden des Angußkegels angeschlossen sind.

Weitere Merkmale und Vorteile der Erfindung werden nachfolgend anhand eines in der Zeichnung dargestellten Ausführungsbeispieles näher erläutert. Es zeigen

Figur 1 im Schnitt ein Teilstück eines Formwerkzeuges für Mehrschicht-Formteile aus Kunststoff mit einem zugehörigen Angußkegel und daran angesetzten Spritzeinheiten für mehrere Kunststoffkomponenten sowie

Figur 2 die Stirnansicht des Angußkegels in Pfeilrichtung II der Fig. 1 gesehen.

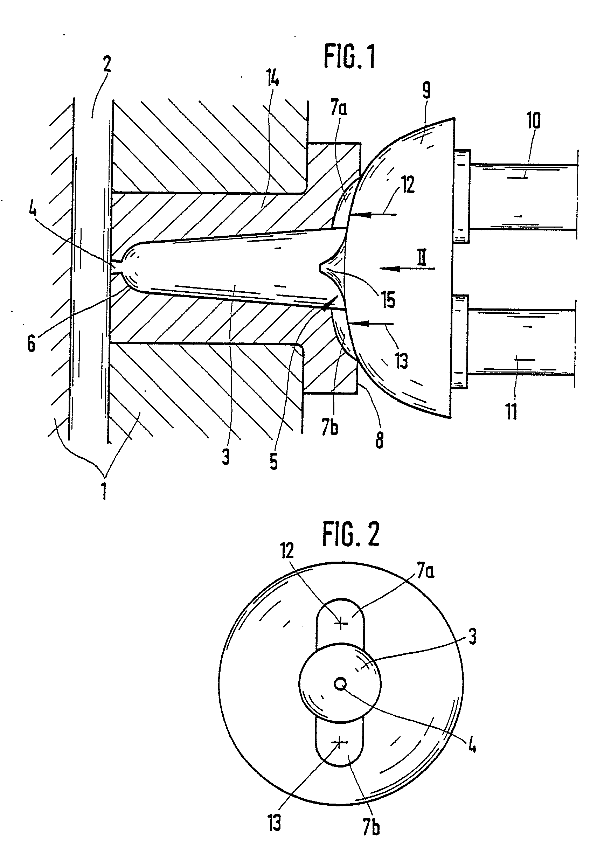

In Fig. 1 ist ein Teilstück eines Formwerkzeuges 1 zum Spritzgießen von Mehrschicht-Formteilen aus mindestens zwei Kunststoffkomponenten dargestellt. Dieses Formwerkzeug 1 weist dabei einen Formhohlraum 2 auf, welcher die Gestalt des herzustellenden Mehrschicht-Formteils bestimmt.

Zum Einführen der thermoplastischen Kunststoffschmelze in den Formhohlraum 2 des Formwerkzeuges 1 dient ein Angußkegel 3, der in einen Angußkanal 4 einmündet, welcher wiederum mit dem Formhohlraum 2 in Verbindung steht. Der Angußkanal 4 hat dabei einen gegenüber dem Angußkegel 3 stark verengten Querschnitt, wobei der Angußkegel 3 eine von seiner Angußöffnung 5 aus zum Angußkanal 4 hin konvergierende, insbesondere schlank kegelförmige, Gestalt hat und sein dem Angußkanal 4 benachbarter Endabschnitt mit einer sphärischen Übergangsmulde in den Angußkanal 4 mündet.

Der Durchlaßquerschnitt des Angußkanals 4 entspricht dabei nur einem Bruchteil des Angußkegel-Querschnitts in dessen die Übergangsmulde 6 enthaltenden Endabschnitt, wie das ohne weiteres und deutlich der Fig. 1 entnommen werden kann.

Der Angußöffnung 5 des Angußkegels 3 sind zwei radial an deren Umfang anschließende Eintrittsmulden 7a und 7b zugeordnet, die verhältnismäßig flach gestaltet sind und dabei mit ihrem äußeren Ende jeweils in eine ebene Fläche 8 auslaufen, während ihr inneres Ende zum Angußkegel 3 hin offen ist.

An die Angußöffnung 5 sowie die beiden Eintrittsmulden 7a und 7b kann ein Düsenkopf 9 angesetzt werden, welcher bspw. zwei verschiedenen Spritzeinheiten 10 und 11 gemeinsam zugeordnet ist. Dieser Düsenkopf 9 ist dabei für jede Spritzeinheit 10 und 11 mit einem besonderen Durchlaßkanal 12 bzw. 13 versehen. Die Durchlaßkanäle 12 und 13 des Düsenkopfes 9 haben dabei eine solche Anordnung, daß sie außerhalb der Umrißlinien der Angußöffnung 5 des Angußkegels 3 in die Eintrittsmulden 7a und 7b gerichtet sind, wie das in Fig. 1 durch die beiden Pfeile und in Fig. 2 durch die beiden Kreuze angedeutet ist.

Der Angußkegel 3 mit dem verengten Angußkanal 4 sowie den beiden Eintrittsmulden 7a und 7b ist in eine Angußbuchse 14 eingearbeitet, welche in das Formwerkzeug 1 an der jeweils gewünschten Stelle eingesetzt werden kann, wie das in Fig. 1 zu sehen ist.

Wenn die beiden Spritzeinheiten 10 und 11 für zwei unterschiedliche Kunststoffkomponenten mit ihrem gemeinsamen Düsenkopf 9 an die Angußbuchse 14 angesetzt sind, wie das die Fig. 1 zeigt, können die beiden Kunststoffkomponenten mit einer festgelegten Zeitfolge, insbesondere während aufeinanderfolgender Zeiträume zunächst in verschiedene Querschnittszonen des gemeinsamen Angußkegels 3 eingeleitet werden. Daraufhin wird dann die jeweilige Kunststoffkomponente innerhalb dieses Angußkegels 3 konvergierend in den Angußkanal 4 und damit in den Formhohlraum 2 des Formwerkzeugs 1 gedrückt.

Jede Kunststoffkomponente wird dabei aus ihrer Spritzeinheit 10 bzw. 11 in die zugehörige Eintrittsmulde 7a bzw. 7b geführt und erst dann aus dieser unter seitlicher Ablenkung in den Angußkegel 3 eingeleitet. Damit die Fließbewegung der jeweiligen Kunststoffkomponente aus der Eintrittsmulde 7a bzw. 7b in den Angußkegel 3 opti

miert wird, kann der Düsenkopf 10 mit einem leistenartigen Vorsprung 15 versehen werden, welcher in die Angußöffnung 5 des Angußkegels 3 hineinragt, und zwar so, daß er die aus der jeweiligen Eintrittsmulde 7a bzw. 7b kommende Kunststoffkomponente in Richtung der Längsachse des Angußkegels 3 ablenkt.

Unter fortwährender Kontraktion gelangen die in der jeweils vorgegebene Zeitfolge zugeführten beiden Kunststoffkomponenten zur sphärischen Übergangsmulde 6 des Angußkegels 3 und werden dort wiederum unter seitlicher Ablenkung sowie mit Kontraktionsströmung, also erhöhter Strömungsgeschwindigkeit, in den verengten Angußkanal 4 gepreßt.

Es hat sich gezeigt, daß auf diese Art und Weise sowie mit Hilfe der besonderen Ausgestaltung der Angußbuchse 14 auch Kunststoffkomponenten mit wesentlich verschiedenen Verhal tens-, Verarbeitungs- und/oder Temperatureigenschaften in den Formhohlraum 2 ein und desselben Formwerkzeugs 1 eingespritzt werden können, ohne daß dabei Schwierigkeiten auftreten, welche die Qualität der fertigen Mehrschicht-Formteile beeinträchtigen. Wichtig ist dabei auch, daß der bei jedem Spritzvorgang innerhalb des Angußkegels 3 sowie des Angußkanals 4 entstehende Anguß nur einen sehr geringen Verbindungsquerschnitt zu dem eigentlichen Mehrschicht-Formteil hat, welcher leicht durchtrennt bzw. abgerissen werden kann.

Aus dem Angußkegel 3 und den Eintrittsmulden 7a, 7b läßt sich der Anguß nach dem Öffnen des Formwerkzeugs 1 leicht dadurch entfernen, daß bei abgehobenem Düsenkopf 9 Preßluft in den Angußkanal 4 eingeführt wird, welche dann den Anguß aus dem Angußkegel 3 herausdrückt. Gegebenenfalls läßt sich jedoch der Anguß auch auf mechanischem Wege von der Angußöffnung 5 her aus dem Angußkegel 3 der Angußbuchse 14 herausziehen.

Obwohl bei dem in der Zeichnung dargestellten Ausführungsbeispiel die Angußbuchse 14 so ausgelegt ist, daß bei ihrer Benutzung Mehrschicht-Formteile aus zwei Kunststoffkomponenten gefertigt werden können, liegt es ohne weiteres auf der Hand, daß die Angußbuchse 14 auch eine Gestaltung zuläßt, welche die Verarbeitung von mehr als zwei Kunststoffkomponenten ermöglicht. Hierzu brauchen lediglich Anzahl und Winkellage der Eintrittsmulden relativ zum Angußkegel entsprechend variiert zu werden. Für die Verarbeitung von drei Kunststoffkomponenten sind also drei Eintrittsmulden vorzusehen, wobei zwischen diesen dann ein Winkelabstand von 120° vorhanden ist.

Selbstverständlich muß auch die Anzahl der Spritzeinheiten und der diesen zugeordneten Durchlaßkanäle im Düsenkopf 9 entsprechend variiert werden, damit die verschiedenen Kunststoffkomponenten der jeweils hierfür vorgesehenen Eintrittsmulde zugeführt werden, bevor sie dann in den eigentlichen Angußkegel 3 gelangen.

Es ist ohne weiteres erkennbar, daß sich die Angußbuchsen 14 mit dem Angußkegel 3 dem Angußkanal 4 sowie den Eintrittsmulden 7a und 7b leicht und problemlos herstellen lassen und daher kostengünstig bereitgestellt werden können.

Die Form des leistenartigen Vorsprungs 15 am Düsenkopf 9 kann den jeweiligen Bedürfnissen entsprechend variiert werden, wenn es darauf ankommt, die Masseströmungen aus den Eintrittsmulden 7a und 7b in den Angußkegel 3 zu optimieren.

## Ansprüche

1. Verfahren zur Herstellung von Mehrschicht-Formteilen aus mindestens zwei Kunststoffkomponenten mit wesentlich verschiedenen Verhaltens-, Verarbeitungs- und/oder Temperatureigenschaften, bei dem die Kunststoffkomponenten aus den verschiedenen Spritzeinheiten über eine Angußbuchse in den Formhohlraum eines Formwerkzeuges gespritzt werden,
**dadurch gekennzeichnet,**
daß die Kunststoffkomponenten mit einer festgelegten Zeitfolge, insbesondere während aufeinanderfolgender Zeiträume, zunächst in verschiedene Querschnittszonen eines gemeinsamen Angußkegels (3) eingeleitet und daraufhin in diesem Angußkegel (3) konvergierend in den Angußkanal (4) der Angußbuchse (14) gedrückt werden.

2. Verfahren nach Anspruch 1,
**dadurch gekennzeichnet,**
daß mindestens eine Kunststoffkomponente zunächst aus ihrer Spritzeinheit (10 bzw. 11) unter seitlicher Ablenkung (7a, 7b) in den Angußkegel (3) eingeleitet und dann aus diesem Angußkegel (3) wiederum unter seitlicher Ablenkung (6) mit Kontraktionsströmung in den Angußkanal (4) der Angußbuchse (14) geführt wird.

3. Vorrichtung zur Herstellung von Mehrschicht-Formteilen aus mindestens zwei Kunststoffkomponenten mit wesentlich verschiedenen Verhaltens-, Verarbeitungs- und/oder Temperatureigenschaften, bei der die Kunststoffkomponenten aus den verschiedenen Spritzeinheiten über eine gemeinsame Angußbuchse in den Formhohlraum eines Formwerkzeuges spritzbar sind, insbesondere zur Durchführung des Verfahrens nach einem der Ansprüche 1 und 2,
**dadurch gekennzeichnet,**
daß der Angußkegel (3) eine von der Angußöffnung (5) für die Spritzeinheiten (10, 11) zum Angußkanal (4) der Angußbuchse (14) hin, z.B. schlank kegelförmig, konvergierende Form aufweist,
daß die Angußöffnung (5) des Angußkegels (3) für mindestens eine Spritzeinheit (10, 11) in eine radial nach auswärts geführte, flache Eintrittsmulde (7a und 7b) ausläuft,
und daß der innere Endabschnitt des Angußkegels (3) mit einer sphärischen Übergangsmulde (6) unter starker Querschnittsverengung in den Angußkanal (4) der Angußbüchse (14) mündet.

4. Vorrichtung nach Anspruch 3,
**dadurch gekennzeichnet,**
daß die Spritzeinheiten (10, 11) mit den Durchlaßkanälen (12, 13) ihrer Düsenköpfe (9) außerhalb der Umrißlinien der Angußöffnung (5) des Angußkegels (3) in die Eintrittsmulden (7a und 7b) der Angußbuchse (14) gerichtet sind.

5. Vorrichtung nach einem der Ansprüche 4 und 3, **dadurch gekennzeichnet,**
daß die Spritzeinheiten (10 und 11) über einen gemeinsamen, mindestens zwei Durchlaßkanäle (12 und 13) enthaltenden Düsenkopf (9) an die Eintrittsmulden (7a und 7b) sowie die Angußöffnung (5) des Angußkegels (3) angeschlossen sind (Fig. 1).

61 329

FIG. 1

FIG. 2